# EUROPÄISCHE PATENTSCHRIFT

(11) **EP 1 361 089 B1**
(45) Veröffentlichungstag und Bekanntmachung des Hinweises auf die Patenterteilung: **10.05.2006**
(21) Anmeldenummer: 03010221.4
(22) Anmeldetag: 07.05.2003
(51) Int. Cl.: B60H 1/00, F24H 9/20

(54) **Verfahren und Vorrichtung zur Temperaturüberwachung eines elektrischen Heizelements**
Method and device for monitoring the temperature of an electric heating device
Procédé et dispositif de contrôle de la température d'un élément chauffant électrique

(30) Priorität: 08.05.2002 DE 10220413
(43) Veröffentlichungstag der Anmeldung: 12.11.2003
(73) Patentinhaber: Behr GmbH & Co. KG, 70469 Stuttgart (DE)
(72) Erfinder: Baruschke, Wilhelm, Dipl.-Ing., 73117 Wangen (DE); Kampf, Hans, Dipl.-Ing., 71404 Korb (DE); Lochmahr, Karl, Dipl.-Ing. (FH), 71665 Vaihingen (DE)
(74) Vertreter: Grauel, Andreas

(56) Entgegenhaltungen:
- EP-A- 0 665 129
- US-A- 5 636 318
- US-B1- 6 355 913

## Beschreibung

Die Erfindung betrifft ein Verfahren zur Temperaturüberwachung eines elektrischen Heizelements für eine Belüftungs-, Heizungs- und/oder Klimaanlage eines Fahrzeugs. Des Weiteren betrifft die Erfindung eine Vorrichtung zur Temperaturüberwachung.

In Klimaanlagen für Kraftfahrzeuge werden unter anderem temperaturkritische Bauteile, wie z.B. ein elektrisches Heizelement, verwendet, die aus Sicherheitsgründen eine Temperaturüberwachung erforderlich machen. Üblicherweise wird ein derartiges elektrisches Heizelement, auch Zuheizer genannt, in Luftführungskanälen eingesetzt, um die Wärme an die in den Fahrzeuginnenraum strömende Luft abzugeben.

Dies wird z.B. in der EP 0665129 gezeigt, der als nächstliegender Stand der Technik angesehen wird.

Aus der DE 44 34 613 A1 ist beispielsweise eine Heizeinrichtung bekannt, mit einem elektrischen Heizkörper, der einen PTC-Heizelemente aufweisenden Heizblock (PTC = positiver Temperatur Koeffizient, beispielsweise temperaturabhängiger Halbleiter-Widerstand mit steigender Widerstandscharakteristik mit steigender Temperatur) enthält. Vorteilhaft ist, dass die PTC-Heizelemente (PTC auch Kaltleiter genannt) selbstregelnd sind und keine Schutzeinrichtung gegen Überhitzung, z.B. bei Ausfall des Gebläse erforderlich ist. Insbesondere im Fehlerfall, z.B. bei abgeschaltetem oder ausgefallenem Gebläse oder bei einem Fremdkörper auf der Zuheizeroberfläche, reduziert sich die Heizleistung automatisch. Bei elektrischen Zusatzheizelementen, die nicht selbstregelnd sind, ist der oben beschriebene Schutzmechanismus nicht gegeben.

Zur Erfassung von Übertemperaturen oder einer Überhitzung des Heizelements ist es aus der DE 297 09 337 U1 bekannt, eine Abschaltvorrichtung mit einem Thermoschalter vorzusehen, der in thermischem Kontakt mit dem Heizkörper oder dem Heizelement steht. Bei Überhitzung des Heizelements schaltet die Abschaltvorrichtung das Heizelement selbsttätig ab. Eine differenzierte Überwachung auf Überhitzung, z.B. durch einen Fremdkörper punktuell verursacht, ist aber auch mit dieser Abschaltvorrichtung nicht ermöglicht. Somit ist die Überwachung des Heizelements auf Überhitzung begrenzt.

Der Erfindung liegt daher die Aufgabe zugrunde, ein Verfahren zur Temperaturüberwachung eines elektrischen Heizelements für ein Fahrzeug anzugeben, welches besonders einfach und kostengünstig ausgebildet ist und dabei ein besonders hohes und ausreichendes Maß an Sicherheit bietet. Des Weiteren ist eine besonders einfach ausgebildete Vorrichtung zur Temperaturüberwachung des Heizelements anzugeben.

Die erstgenannte Aufgabe wird erfindungsgemäß gelöst durch ein Verfahren zur Temperaturüberwachung eines elektrischen Heizelements für eine Belüftungs-, Heizungs- und/oder Klimaanlage eines Fahrzeugs, bei dem eine das Heizelement repräsentierende Wärmestrahlung oberflächenspezifisch erfasst und auf Einhaltung eines Grenzwertes überwacht wird.

Die Erfindung geht dabei von der Überlegung aus, dass für eine ein hohes und ausreichendes Maß an Sicherheit bewirkende Überwachung eines temperaturkritischen Bauteils, wie eines elektrischen Heizelements für eine Belüftungs-, Heizungs- und/oder Klimaanlage eines Fahrzeugs, eine die Kontur oder Oberfläche des Heizelements berücksichtigende Temperaturüberwachung ermöglicht sein sollte. Insbesondere sollten innerhalb des temperaturkritischen Bauteils, d.h. des elektrischen Heizelements, oder punktuell unzulässig hohe Temperaturen, welche z.B. durch einen Fremdkörper auf der Heizoberfläche verursacht werden, sicher identifiziert werden können. Dazu wird eine das Heizelement repräsentierende Wärmestrahlung oberflächenspezifisch erfasst. Hierdurch ist eine örtliche Erfassung von Übertemperaturen des elektrischen Heizelements und deren Überwachung auf Einhaltung eines Grenzwertes ermöglicht.

Zweckmäßigerweise wird die Wärmestrahlung an der Oberfläche des Heizelements zumindest flächenweise erfasst. Je nach Art und Ausführung kann beispielsweise die gesamte Oberfläche des Heizelements und somit eine flächendeckende Erfassung der Wärmestrahlung des Heizelements durchgeführt werden.

Die Wärmestrahlung wird berührungslos erfasst. Eine bevorzugte Ausführungsform für die berührungslose Erfassung der Wärmestrahlung wird mittels eines infrarotempfindlichen Sensors ausgeführt. Dabei wird mittels Strahlungsthermometrie anhand der berührungslosen Erfassung der Oberflächentemperatur des elektrischen Heizelements die Wärmestrahlung ermittelt und ausgewertet. Dazu wird mittels des infrarotempfindlichen Sensors die aus dem elektrischen Heizelement ausgestrahlte Energiemenge oder Wärmemenge erfasst. Durch eine derartige berührungslose Messung der Wärmestrahlung des elektrischen Heizelements, z.B. mittels eines Thermopile-Sensors (Infrarot-Sensor) wird die Oberflächentemperatur der Heizelemente erfasst, oder mittels einer sogenannten Wärmekamera oder Infrarot-Kamera, sind punktuelle Messungen der Oberflächentemperatur des Heizelements ermöglicht. Insbesondere durch die Verwendung einer Infrarot-Kamera oder eines Infrarot-Sensors können Temperaturen und Temperaturverteilungen auf der Oberfläche des Heizelements in Form eines Datenfeldes oder eines Farbbildes dargestellt und ausgewertet werden.

Alternativ kann die Wärmestrahlung durch Berührung des Heizelements erfasst. Bevorzugt wird die Wärmestrahlung mittels eines das Heizelement zumindest teilweise berührenden temperatursensitiven Elements erfasst. Als temperatursensitives Element ist bevorzugt ein Thermoelement oder eine Glas- oder Kunststofffaserleitung oder eine elektrische Widerstandsleitung mit ausgeprägter PTC- oder NTC-Charakteristik (NTC = negative Temperaturcharakteristik) vorgesehen. Durch eine derartige das Heizelement kontaktierende oder berührende Erfassung der Wärmestrahlung, insbesondere durch eine Einbettung oder Integration des temperatursensitiven Elements in das Heizelement gegebenenfalls elektrisch isoliert, können Innentemperaturen oder deren Verläufe des elektrischen Heizelements erfasst werden.

Die Wärmestrahlung wird flächendeckend auf Überschreiten des Grenzwertes überwacht. Hierdurch ist eine punktuelle Überhitzung des elektrischen Heizelements, z.B. durch einen Fremdkörper auf der Heizoberfläche verursacht, besonders sicher und schnell identifizierbar. Zweckmäßigerweise wird bei Überschreiten des Grenzwerts für die Wärmestrahlung das Heizelement deaktiviert. Somit ist bei einem sicher und schnell identifizierten Fehler, insbesondere bei einer lokalen oder allgemeinen Überhitzung des elektrischen Heizelements, eine unmittelbare und schnelle Abschaltung des fehlerhaften Heizelements ermöglicht, so dass unzulässig hohe Temperaturen gegebenenfalls vermieden werden.

Die zweitgenannte Aufgabe wird erfindungsgemäß gelöst durch eine Vorrichtung zur Temperaturüberwachung eines elektrischen Heizelements für eine Belüftungs-, Heizungs- und/oder Klimaanlage eines Fahrzeugs mit einem Sensor zur oberflächenspezifischen Erfassung einer das Heizelement repräsentierenden Wärmestrahlung und einer mit dem Sensor verbundenen Steuereinheit zur Überwachung der Wärmestrahlung auf Einhaltung eines Grenzwertes. Je nach Art und Ausführung ist die Steuereinheit beispielsweise als integrierte Schaltung ausgebildet. Alternativ kann das die Steuereinheit als Softwaremodul ausgebildet sein.

Bevorzugt ist der Sensor zur oberflächenspezifischen Erfassung der Wärmestrahlung als infrarotempfindlicher Sensor (Thermopile-Sensor) ausgebildet. Beispielsweise ist der infrarotempfindliche Sensor eine Infrarot-Kamera. Durch einen derartigen infrarotempfindlichen Sensor ist eine berührungslose Messung der Wärmestrahlung des elektrischen Heizelement ermöglicht.

Alternativ oder zusätzlich kann der Sensor als temperatursensitives Element ausgebildet sein. Bei einem als temperatursensitives Element ausgebildeten Sensor erfolgt die Erfassung der Wärmestrahlung durch Berührung oder Kontaktierung des Sensors mit dem Messobjekt - dem Heizelement. Für eine besonders einfache und kostengünstige Ausbildung des temperatursensitiven Elements, ist dieses zweckmäßigerweise als ein temperaturabhängige Widerstandsleitung mit PTC- oder NTC-Charakteristik, ausgebildet.

In einer alternativen Ausführungsform ist der Sensor bevorzugt als temperatursensitiver Lichtwellenleiter ausgebildet. Hierbei ändert der temperatursensitive Lichtwellenleiter in Abhängigkeit von der Temperatur die Farbe. Der Farbumschlag korreliert dabei mit der Lichtdurchlässigkeit. Hierdurch ist eine besonders einfache Überwachung der Wärmestrahlung auf Einhaltung eines Grenzwertes anhand der Änderung der Lichtdurchlässigkeit ermöglicht. Für eine möglichst gute Kontaktierung des temperatursensitiven Elements mit dem Messobjekt - dem Heizelement - ist das temperatursensitive Element in dem Heizelement integriert.

Zweckmäßigerweise ist der Steuereinheit für eine Analyse der Messsignale ein Grenzwertmodul zugeordnet. Für eine besonders schnelle und unmittelbare Auslösung eines Steuersignals bei einem identifizierten Fehlerfall ist der Steuereinheit ein Abschaltmodul zugeordnet. Beispielsweise können die beiden Module - das Grenzwertmodul und das Abschaltmodul - separat, z.B. als integrierte Schaltungen, ausgebildet sein. Je nach Art und Ausführung der Belüftungs-, Heizungs- und/oder Klimaanlage des Fahrzeugs können das Grenzwertmodul und das Abschaltmodul integraler Bestandteil eines Klimasteuergerätes sein.

Die mit der Erfindung erzielten Vorteile bestehen insbesondere darin, dass durch eine derartige oberflächenspezifische Erfassung der Wärmestrahlung des elektrischen Heizelements und deren Überwachung auf Einhaltung eines Grenzwertes eine besonders einfache und flächendeckende Temperaturüberwachung des temperaturkritischen Bauteils sichergestellt ist. Insbesondere sind lokale Übertemperaturen des elektrischen Heizelements sicher identifizierbar. Hierdurch ist bereits bei einem lokalen Fehler des elektrischen Heizelements, z.B. durch Eindringen eines Fremdkörpers auf die Oberfläche des elektrischen Heizelements, ein hinreichend guter Schutz gegen Überhitzung des elektrischen Heizelements insbesondere durch dessen Abschaltung sichergestellt. Darüber hinaus ist durch den besonders einfachen Aufbau der Vorrichtung zur Temperaturüberwachung eine Nachrüstung für bereits im Fahrzug integrierte Heizelemente ermöglicht.

Ausführungsbeispiele der Erfindung werden anhand einer Zeichnung näher erläutert. Darin zeigen:
- Figur 1: schematisch eine Vorrichtung zur Temperaturüberwachung eines elektrischen Heizelements mit drei alternativen Sensoren zur oberflächenspezifischen Überwachung des Heizelements und einem Grenzwertmodul zur Überwachung der Wärmestrahlung auf Einhaltung eines Grenzwertes.
- Figur 2: schematisch einen zur berührungslosen Erfassung der Wärmestrahlung ausgebildeten Sensor.
- Figur 3: schematisch eine alternative Ausführungsform eines das Heizelement berührenden Sensors zur Erfassung der Wärmestrahlung, und
- Figur 4: eine weitere alternative Ausführungsform für einen das Heizelement berührenden Sensor zur Erfassung der Wärmestrahlung.

Einander entsprechende Teile sind in allen Figuren mit den gleichen Bezugszeichen versehen.

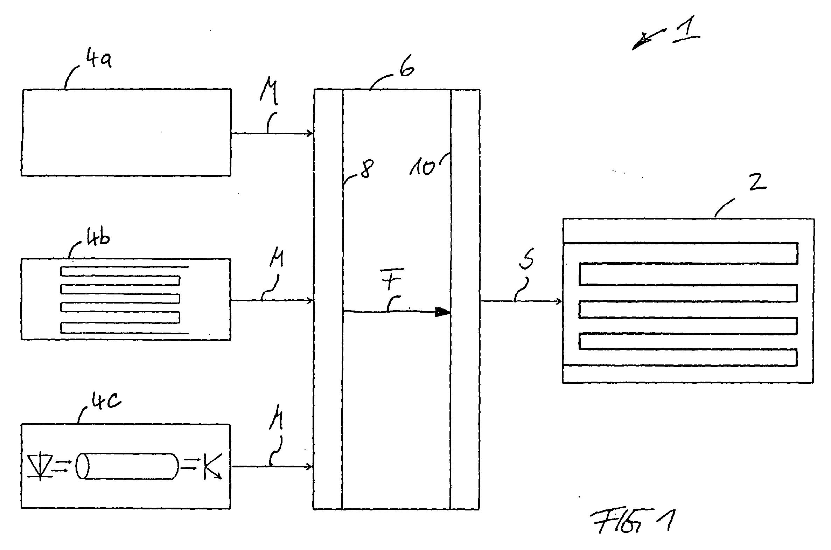

Figur 1 zeigt eine Vorrichtung 1 zur Temperaturüberwachung eines elektrischen Heizelements 2 für eine nicht näher dargestellte Belüftungs-, Heizungs- und/oder Klimaanlage eines Fahrzeugs. Das elektrische Heizelement 2 ist in diesem Ausführungsbeispiel nicht eigensicher ausgeführt.

Die Vorrichtung 1 umfasst zur Temperaturüberwachung drei alternative Sensoren 4a bis 4c zur oberflächenspezifischen Erfassung einer das Heizelement 2 repräsentierenden Wärmestrahlung. Zur Überwachung der Wärmestrahlung auf Einhaltung eines Grenzwertes für eine die Wärmestrahlung repräsentierende Temperatur sind die jeweiligen Sensoren 4a bis 4c mit einer Analyse- oder Steuereinheit 6 verbunden. Dabei werden mittels der Steuereinheit 6 von einen der Sensoren 4a bis 4c erfasste Messsignale M für die Wärmestrahlung des Heizelements 2 analysiert und auf Überschreiten des Grenzwertes sowohl örtlich als auch flächendeckend überwacht. Zur Analyse der Messsignale M umfaßt die Steuereinheit 6 ein Grenzwertmodul 8 und ein Abschaltmodul 10. Mittels des Grenzwertmoduls 8 werden die Messsignale M mit einem Grenzwert für eine maximal zulässige Wärmestrahlung des Heizelements 2, insbesondere für eine maximal zulässige Temperatur verglichen. Bei Überschreiten des Grenzwertes durch die aktuell erfaßten Messsignal M wird mittels des Grenzwertmoduls 8 dem Abschaltmodul 10 ein Meldesignal F zugeführt. Anhand des Meldesignals F wird mittels des Abschaltmoduls 10 ein Steuersignal S zur Abschaltung des Heizelements 2 erzeugt. Je nach Art und Ausbildung des Grenzwertmoduls 8 und des Abschaltmoduls 10 können diese separat ausgebildet sein. Alternativ können das Grenzwertmodul 8 und das Abschaltmodul 10 in der Steuereinheit 6 integriert sein. Bei der Steuereinheit 6 handelt es sich beispielsweise um ein Steuergerät für das Heizelement 2 oder für eine nicht näher dargestellte Klimaanlage eines Fahrzeugs. Dabei sind das Grenzwertmodul 8 und das Abschaltmodul 10 als Softwaremodule ausgebildet.

Im Betrieb der Vorrichtung 1 wird anhand der von den Sensoren 4a bis 4c erfassten Messsignale M mittels der Steuereinheit 6 ein Fehlerfall, z.B. eine örtliche Temperaturerhöhung des Heizelements 2, identifiziert. In Abhängigkeit von den erfassten Messsignale M eines der Sensoren 4a bis 4c wird das Heizelement 2 mittels der Steuereinheit 6 anhand des Steuersignals S bedarfsgerecht ein- und/oder ausgeschaltet. Alternativ kann das Heizelement 2 quasi stufenlos geschaltet werden, z.B. mittels einer PWM-Analyse der Messsignale M (PWM = Pulsweitenmodulation). Mit anderen Worten: In Abhängigkeit von der Art und Ausführung der Steuereinheit 6, insbesondere des Grenzwertmoduls 8 und des Abschaltmoduls 10, wird im Fehlerfall ein Steuersignal S zur sicheren Abschaltung oder zur Leistungsreduzierung des Heizelements 2 generiert. Je nach Art und Ausbildung der Vorrichtung 1 können die verschiedenartigen Sensoren 4a bis 4c mittels eines nicht näher dargestellten elektronischen Umschalters, z.B. eines Multiplexers, für einzelne alternative Messverfahren zugeschaltet werden. Alternativ können mehrere Sensoren 4a bis 4c kombiniert für ein funktional diversitäres Messverfahren, bei welchem parallel die Wärmestrahlung des Heizelements 2 durch die verschiedenen Messverfahren erfasst wird, verwendet werden.

Des Weiteren können bedingt durch die Ausbildung der Steuereinheit 6 als integrierte Schaltung oder als Softwaremodul weitere betriebsrelevante Komponenten, wie z.B. ein Steuergerät des Heizelements 2 oder andere mit dem Heizelement 2 im Wirkzusammenhang stehenden Fahrzeugkomponenten, und deren Zustände bestimmt und bei der Analyse der Wärmestrahlung des Heizelements 2 berücksichtigt werden.

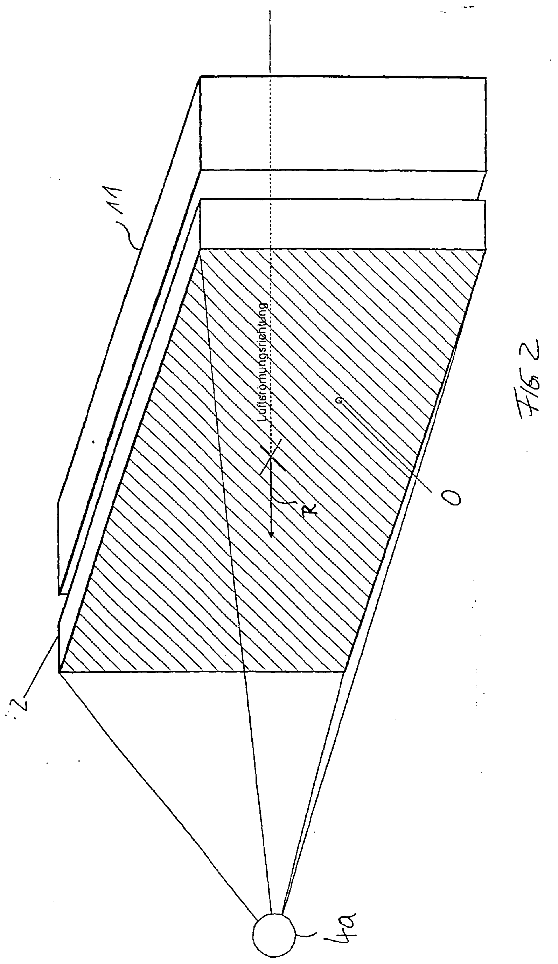

Je nach Art und Ausbildung des Sensors 4a bis 4c wird die Wärmestrahlung des Heizelements 2 berührungslos und/oder berührend erfasst. Figur 2 zeigt den Sensor 4a, welcher zur berührungslosen Erfassung der Wärmestrahlung als infrarotempfindlicher Sensor ausgebildet ist. Mit anderen Worten: Der als Strahlungsdetektor im infraroten Bereich ausgebildete Sensor 4a erfasst die Wärmestrahlung des Heizelements 2. Die Oberflächentemperatur wird mittels des Sensors 4a in ein Spannungssignal umgewandelt. Hierbei wird der thermoelektrische Effekt (Seebeck-Effekt) ausgenutzt. Dabei wird mittels des Sensors 4a die Oberfläche O des elektrischen Heizelements 2 (schraffiert dargestellt) im infraroten Bereich abgescannt. Weitere Funktionsprinzipien des Sensors 4a basieren auf einer Widerstandsänderung in Abhängigkeit voon der Temperatur (Bolometer) oder auf dem pyroelektrischen Effekt.

Der Sensor 4a ist dazu bevorzugt zum Heizelement 2 beabstandet und auf zur Luftströmungsrichtung R zugewandten Seite angeordnet. Bedingt durch die die Luftströmungsrichtung R berücksichtigenden Anordnung des Sensors 4a ist eine weitgehend genaue Erfassung der Wärmestrahlung des Heizelements 2 ermöglicht. Auf der zur Luftströmungsrichtung R abgewandten Seite umfaßt das Heizelement 2 je nach Ausführungsart einen Wärmetauscher 11. Anhand von global oder lokal auftretenden Temperaturdifferenzen (= Messsignale M) und daraus resultierenden Spannungsdifferenzen werden global bzw. nur lokal auftretende Übertemperaturbereiche des elektrischen Heizelements 2 detektiert und zur Generierung des Steuersignals S zur Deaktivierung oder Leistungsreduzierung des Heizelements 2 verwendet.

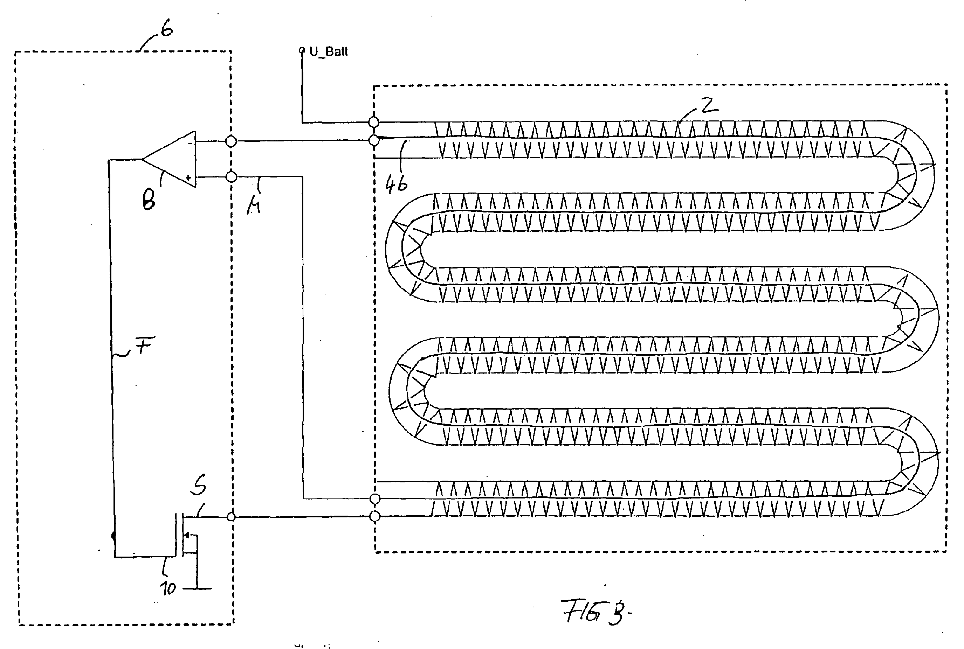

Figur 3 zeigt einen als temperatursensitives Element ausgebildeten Sensor 4b zur oberflächenspezifischen und das Heizelement 2 berührenden Erfassung dessen Wärmestrahlung. Das Heizelement 2 ist beispielsweise als mäanderförmige Wellrippe ausgeführt. Der Sensor 4b als temperatursenstitive Leitung ist parallel zur Wellrippe über die gesamte Fläche des Heizelements 2 in dieses integriert. Bevorzugt ist der Sensor 4b als elektrische Widerstandsleitung mit ausgeprägter PTC- oder NTC Charakteristik ausgebildet. Durch eine die gesamte Oberfläche des Heizelements 2 berücksichtigende Integration des Sensors 4b wird auch bei einer punktuellen Übertemperatur des Heizelements 2 ein hinreichend genaues Messsignal M vom Sensor 4b erfasst und der Steuereinheit 6, insbesondere dem Grenzwertmodul 8, zugeführt. Im Fehlerfall des Heizelements 2 wird anhand des Messsignals M des Sensors 4b das Fehlersignal F dem Abschaltmodul 10 zur Generierung des Steuersignals S zur Abschaltung oder Leistungsreduzierung des Heizelements 2 zugeführt. Je nach Art und Ausbildung des Heizelements 2 kann dieses anstelle der mäanderförmigen Geometrie der Wellrippe und des integrierten temperatursensitiven Leiters in einer anderen Form ausgeführt sein.

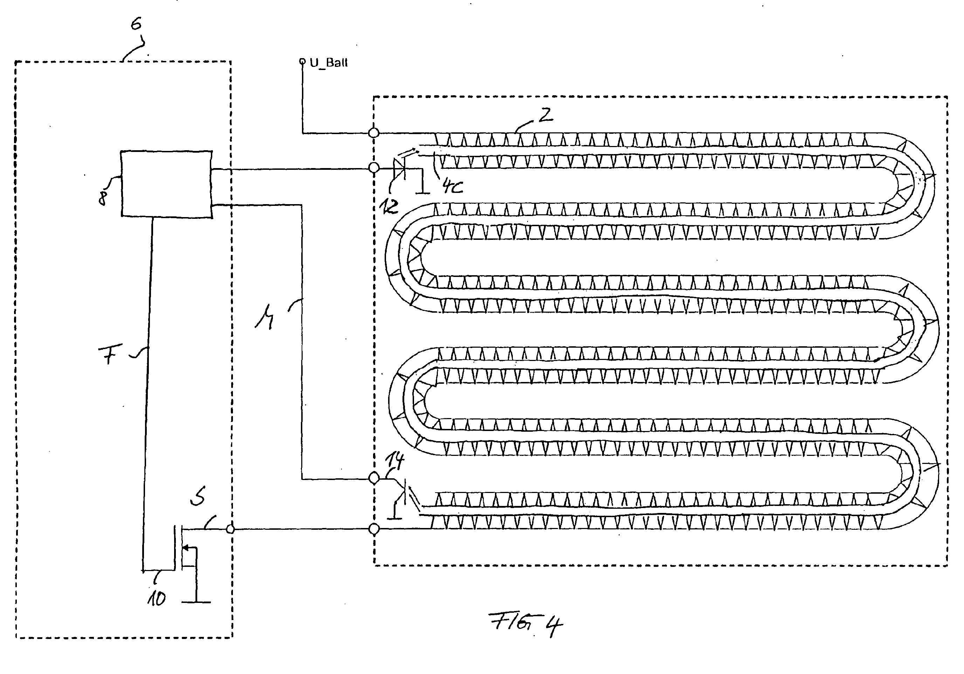

Figur 4 zeigt eine weitere alternative Ausführungsform für das Messverfahren zur Temperaturüberwachung mit dem Sensor 4c, welcher als temperatursensitiver Lichtwellenleiter ausgebildet ist. Zur Temperaturüberwachung des elektrischen Heizelements 2 wird eine Glas- oder Kunststofffaserleitung verwendet, die in Abhängigkeit von der Temperatur die Farbe verändert. Ein derartiger Farbumschlag korreliert bevorzugt mit der Lichtdurchlässigkeit. Zur Erfassung der Wärmestrahlung oder der Temperatur anhand der Änderung der Lichtdurchlässigkeit weist der Sensor 4c eingangsseitig eine Lichtquelle 12 auf. Ausgangsseitig ist ein die Lichtänderung erfassender Lichtempfänger 14 vorgesehen. Die Lichtquelle 12 wird mittels der Steuereinheit 6 gesteuert. Das mittels des Lichtempfängers 14 erfasste Messsignal M wird mit einem der Lichtquelle 12 zugeführten Lichtsignal L verglichen und mittels des Grenzwertmoduls 8 auf Einhaltung eines Grenzwertes für eine maximal zulässige Lichtänderung überwacht. Überschreitet die Lichtänderung, welche die Temperatur bzw. Wärmestrahlung des Heizelements 2 repräsentiert, den vorgegebenen Grenzwert, so wird mittels des Abschaltmoduls 10 das Steuersignal S zur Deaktivierung bzw. stufenlosen Leistungsreduzierung des Heizelements 2 generiert.

## Patentansprüche

1. Verfahren zur Temperaturüberwachung eines elektrischen Heizelements (2) einer Belüftungs-, Heizungs- und/oder Klimaanlage eines Fahrzeugs, bei dem eine das Heizelement (2) repräsentierende Wärmestrahlung von dem Heizelement berührungslos, flächendeckend erfasst und auf Einhaltung eines Grenzwertes überwacht wird, wobei im Falle einer auch punktuellen Überhitzung das Heizelement deaktivierbar ist.

2. Verfahren nach Anspruch 1, bei dem die Wärmestrahlung mittels eines infrarotempfindlichen Sensors (4) erfaßt wird.

3. Verfahren nach einem der Ansprüche 1 bis 7, bei dem bei Überschreiten des Grenzwertes für die Wärmestrahlung das Heizelement (2) deaktiviert wird.

4. Belüftungs-, Heizungs- und/oder Klimaanlage eines Fahrzeugs mit einer Vorrichtung (1) zur Temperaturüberwachung eines elektrischen, Heizelements (2) mit einem Sensor (4a bis 4c) zur oberflächenspezifischen Erfassung einer das Heizelement (2) repräsentierende Wärmestrahlung von dem Heizelement berührungslos, flächendeckend erfasst und einer mit dem Sensor (4a oder 4b oder 4c) verbundenen Steuereinheit zur Überwachung der Wärmestrahlung auf Einhaltung eines Grenzwertes wobei im Falle einer auch punktuellen Überhitzung das Heizelement deaktivierbar ist.

5. Vorrichtung nach Anspruch 4, bei dem der Sensor (4a) als infrarotempfindlicher Sensor ausgebildet ist.

6. Vorrichtung nach einem der Ansprüche 4 bis 5, bei dem der Steuereinheit (6) ein Grenzwertmodul (8) zugeordnet ist.

7. Vorrichtung nach einem der Ansprüche 4 bis 6, bei dem der Steuereinheit (6) ein Abschaltmodul (10) zugeordnet ist.

8. Fahrzeug mit einer Belüftungs-, Heizungs- und/oder Klimaanlage mit einer Vorrichtung (1) zur Temperaturüberwachung eines elektrischen Heizelements (2) nach einem der Ansprüche 4 bis 7.

## Claims

1. A process for monitoring the temperature of an electrical heating element (2) in a ventilation, heating and/or air-conditioning system in a vehicle in which the thermal radiation from the heating element representing the heating element (2) is determined across the entire surface thereof using a non-contact method and monitored to establish whether a limit value is being respected, it being possible to deactivate the heating element even if it overheats at specific points only.

2. A process in accordance with claim 1,
in which the thermal radiation is determined by means of an infrared-sensitive sensor (4).

3. A process in accordance with one of claims 1 to 7,
in which the heating element (2) is deactivated when the limit value for the thermal radiation is exceeded.

4. A ventilation, heating and/or air-conditioning system for a vehicle with a device (1) for monitoring the temperature of an electrical heating element (2) having a sensor (4a to 4c) for the surface-specific determination of the thermal radiation from the heating element representing the heating element (2) across the entire surface thereof using a non-contact method and a control unit connected to the sensor (4a or 4b or 4c) for monitoring the thermal radiation to establish whether a limit value is being respected, it being possible to deactivate the heating element even if it overheats at specific points only.

5. A device in accordance with claim 4,
in which the sensor (4a) is designed as an infrared-sensitive sensor.

6. A process in accordance with one of claims 4 to 5,
in which a limit value module (8) is associated with the control device (6).

7. A process in accordance with one of claims 4 to 6,
in which a cut-off module (10) is associated with the control device (6).

8. A vehicle with a ventilation, heating and/or air-conditioning system having a device (1) for monitoring the temperature of an electrical heating element (2) in accordance with one of claims 4 to 7.

## Revendications

1. Procédé destiné à la surveillance de température d'un élément de chauffage électrique (2) d'une installation de ventilation, de chauffage et/ou de climatisation d'un véhicule, dans lequel un rayonnement calorifique représentant l'élément de chauffage (2) est détecté, sans contact et de manière à couvrir l'ensemble d'une zone, et surveillé pour assurer le respect d'une valeur limite, par l'élément de chauffage, l'élément de chauffage pouvant être désactivé en cas de surchauffe même ponctuelle.

2. Procédé selon la revendication 1, dans lequel le rayonnement calorifique est détecté au moyen d'un capteur (4) sensible aux infrarouges.

3. Procédé selon l'une quelconque des revendications 1 à 7, dans lequel l'élément de chauffage (2) est désactivé en cas de dépassement de la valeur limite pour le rayonnement calorifique.

4. Installation de ventilation, de chauffage et/ou de climatisation d'un véhicule comprenant un appareil (1), destiné à la surveillance de température d'un élément de chauffage électrique (2) comprenant un capteur (4a à 4c) destiné à la détection spécifique à la surface d'un rayonnement calorifique représentant l'élément de chauffage (2), sans contact et de manière à couvrir l'ensemble d'une zone par l'élément de chauffage, et une unité de contrôle, liée au capteur (4a ou 4b ou 4c), destinée à la surveillance du rayonnement calorifique pour assurer le respect d'une valeur limite, l'élément de chauffage pouvant être désactivé en cas de surchauffe même ponctuelle.

5. Appareil selon la revendication 4, dans lequel le capteur (4a) est mis en oeuvre sous la forme d'un capteur sensible aux infrarouges.

6. Appareil selon l'une quelconque des revendications 4 à 5, dans lequel un module de valeur limite (8) est affecté à l'unité de contrôle (6).

7. Appareil selon l'une quelconque des revendications 4 à 6, dans lequel un module de mise hors circuit (10) est affecté à l'unité de contrôle (6).

8. Véhicule comprenant une installation de ventilation, de chauffage et/ou de climatisation, comprenant un appareil (1) destiné à la surveillance de température d'un élément de chauffage électrique (2) selon l'une quelconque des revendications 4 à 7.
